# EUROPEAN PATENT APPLICATION

(11) **EP 4 106 130 A1**
(43) Date of publication of application: **21.12.2022**
(21) Application number: 21020319.6
(22) Date of filing: 16.06.2021
(51) Int. Cl.: H02J 3/38, H02J 13/00

(54) **A METHOD AND APPARATUS FOR TWO-DIRECTIONAL COMMUNICATION WITH ONE OR MORE DIRECT-CURRENT POWER GENERATION SOURCES**

(71) Applicant: Special Account of Research Funds of the Technical University of Crete, 73100 Chania (GR)
(72) Inventor: Karystinos, Georgios, GR-73133 Chania (GR); Koutroulis, Eftychios, GR-73100 Chania (GR); Mandourarakis, Ioannis, GR-73100 Chania (GR)

(57) **Abstract**

A system for the generation of AC power from an array of DC power generation sources and the simultaneous two-directional communication between the DC power sources and the terminal computer which the DC power sources of the array are connected to, without the use of a separate circuit at each DC power source to generate and transmit the information signal, but utilizing the same electronic switches that are used for the generation of the AC current to also generate and transmit the information signal. Each integrated DC power source, called iCell, may comprise a circuit that is used to switch on/off the current it produces to send information to the terminal computer and may be supplied by a binary identification (ID) vector that uniquely characterizes it in relation to the other ones. The terminal computer may be configured to establish uplink communication from the iCells to itself. In addition, the terminal computer may establish downlink communication toward the iCells using the same cables that are used for the uplink communication. A communication protocol is also designed and used to schedule the uplink transmission from the iCells to the terminal computer in conjunction with a separate protocol that is designed and used to schedule the downlink transmission from the terminal computer to the iCells. An additional computer program comprising a computer readable code may perform the overall management of smart AC power generation through the control of the iCells.

## Description

### Technical Field

In general, the present disclosure relates to the field of alternating current (AC) power generation. More specifically, the present disclosure relates to an apparatus and a method for the generation of AC current from an array of direct current (DC) power generation sources and the simultaneous two-directional communication between the DC power sources and the terminal computer which the DC power sources of the array are connected to.

### Brief Description of the Drawings

FIG. 1 illustrates a diagram of a device that comprises a plurality of integrated DC power cells forming an array and a terminal computer which the iCells are connected to, in accordance with the first embodiment of the present disclosure.
FIG. 2 depicts a possible implementation of an iCell, in accordance with the first embodiment.
FIG. 3 depicts a specific implementation and use of a binary identification (ID) vector that uniquely characterizes an iCell.
FIG. 4 depicts an alternative implementation and use of a binary identification (ID) vector that uniquely characterizes an iCell.
FIG. 5 depicts an alternative implementation of the uplink transmitter that comprises five more modes of electric power generation, in accordance with the first embodiment.
FIG. 6 depicts the flow diagram of the electronic system of the terminal computer which receives the information transmitted by the uplink transmitter of each iCell of the array of DC power sources, in accordance with the second embodiment.
FIG. 7 depicts an experimental uplink receiver that validates the successful information transmission from the iCell to the terminal computer.
FIG. 8 depicts the flow diagram of an implementation of the downlink transmitter, in accordance with the third and fourth embodiments.
FIG. 9 depicts a possible implementation of the flow diagram of the downlink receiver, wherein the receiver is connected to the H-Bridge unit of each iCell through a differential amplifier which measures the voltage difference across the leads of this H-Bridge.
FIG. 10 depicts another possible implementation of the downlink receiver, wherein the downlink signal is transmitted as time-varying current, using a signal sensor and a high-gain differential amplifier.
FIG. 11 depicts an example of CRC coded information transmitted from an iCell to the terminal computer, according to the sixth embodiment.

### Detailed Description

The present disclosure proposes an apparatus and a method for the generation of alternating current (AC) power from an array of direct current (DC) power generation sources and the simultaneous two-directional communication between the DC power sources and the terminal computer which the DC power sources of the array are connected to. Therefore, the disclosed method uses the array of DC sources to perform two principal operations. First, the power that is generated by the DC sources is combined to produce a total AC current that is handled by the terminal computer. Second, simultaneous two-directional communication between the DC sources and the terminal computer is attained so that information is exchanged. This information can be used for control purposes. For example, each DC source can transmit its status parameters (e.g., the voltage level of the current it produces) to the terminal computer and the terminal computer can transmit control signals to the DC sources.

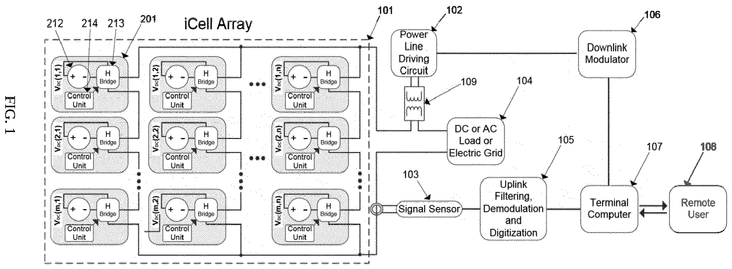

In view of the above, the disclosed method and apparatus will be further explained under reference to Fig. 1, which depicts a diagram of the device according to a first embodiment. The device comprises a plurality of integrated DC power cells or, in short, iCells (201) forming an array (101) and a terminal computer (107) which the iCells are connected to. Each iCell (201) contains a smart DC power source element (212). For example, the smart DC power source may be a photovoltaic (PV) cell or a battery.

The novelty of the disclosed method and apparatus is based on the recognition that, although all the state-of-the-art techniques work without using an additional power amplifier for the injection of the communication signal, they have certain limitations regarding their topology [1-3], some work only under a series connection [4], some only under a parallel connection [5-10] and almost all of the models require a slight change or component addition on the pulse width modulation (PWM) control side in order to create the communication transmitter.

In contrast to the state-of-the-art, the disclosed method and apparatus do not use a separate circuit at each DC power source (212) to generate and transmit the information signal towards the terminal computer (107). Instead, the same electronic switches that are used for the generation of the AC current are also used for the generation of the information signal. This has the benefit of minimal complexity, easy installation and maximum compatibility of the communication feature (no need for redesigning) on an existing power electronics circuit.

In an implementation of the first embodiment, the iCells (201) are connected to each other through cable. Each iCell (201) may be connected directly to the terminal computer (107). Alternatively, as shown in Fig. 1, the iCells (201) may be grouped in subsets that are connected in parallel to the terminal computer (107), wherein the iCells (201) of each subset are electrically connected in series. Moreover, the terminal computer may be connected to a remote user (108).

Each iCell (201) also comprises a circuit that is used to switch on/off the current it produces (213). In one possible implementation, the switch is configured to send information to the terminal computer (107). This communication from the iCell (201) to the terminal computer (107) is called the uplink for the purposes of this disclosure.

In an implementation, each iCell (201) may have its own embedded circuit for production of power and transmission of information regarding its operating status. The individual iCells (201) of the iCell array (101) may be connected to DC voltage sources with different voltage levels.

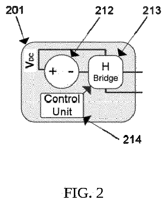

Fig. 2 depicts a possible implementation of an iCell, according to the first embodiment. It utilizes an electronic switch driver which may be an insulated gate bipolar transistor, metal oxide semiconductor field-effect transistor, etc. and drives the DC-AC power H-bridge (the terminal full-bridge) (213) that is integrated in the iCell (201), placed right after the DC power source (212). This H-bridge driving logic undertakes the task of proper signal modulation for the uplink interface, by generating the appropriate pulses for both the power waveform and the information bit-stream waveform, as directed by a Control Unit (214).

In a further implementation, to accomplish transmitting the information that defines the operational status of the iCell (201), the uplink transmitter circuit is supplied by a binary identification (ID) vector that uniquely characterizes each iCell (201) in relation to the other ones, all connected in series and/or in parallel to form the array (101) of DC power sources. This ID may be specified in each iCell (201) by a hardwired external connection of the corresponding pins of its integrated circuit (one pin for each bit of ID). These pins may be provided a voltage either equal to the power supply voltage of the iCell (201) digital circuits or equal to zero Volts, in order to represent the high or low (i.e., 1 or 0), respectively, logic.

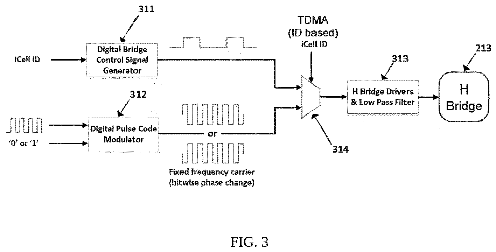

In a specific implementation shown in Fig. 3 this ID has a length of as many binary digits (bits) as needed, in order to distinctly identify it in relation to the rest of the iCells (201) of the same array. This ID allows the uplink transmitter (via the designated digital logic) to generate the output signal of the block named "Digital Bridge Control Signal Generator" (311) and to properly select by multiplexer (314) the time instance where this output is substituted by the pulses of the information signal to be transmitted, generated by the block named "Digital Pulse Code Modulator" (312). A multiplexer like the one of (314) is always forwarding the signal of only one of its inputs to its output. The two inputs are the power waveform and the information bit-stream. The one to be forwarded is selected by the value of a third input signal. In one specific implementation this signal may change values in time, depending on the iCell ID. The output of the multiplexer is a mixed-signal that drives the electronic switches of the H-Bridge (213) either directly or through a low-pass filter circuitry and/or an amplification stage [shown as block (313)] that properly conditions the signal rendering it capable of driving the electronic switches of the H-Bridge (213).

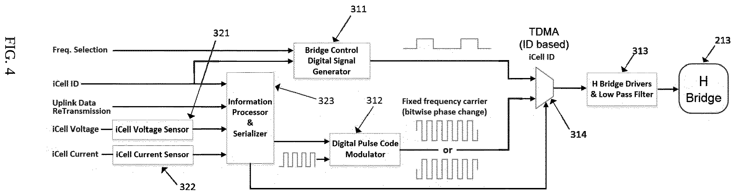

The signal created by the "Digital Bridge Control Signal Generator" (311) amounts to a single component that collectively forms the pseudo-sinusoidal voltage that is supplied to (104) according to the cascaded H-bridge multilevel DC/AC inverter principle of operation. As shown in Fig. 4, the "Freq. Selection" 1-bit input controls the creation of the power wave (two different frequencies for the two different logic levels). The "iCell Voltage" and "iCell Current" 1-bit inputs are directed to sensors (321) and (322), respectively, which create the bit vectors for the iCell (201) output voltage and current, respectively. These bit vectors are passed through the "Information Processor and Serializer" (323) and the output of (323) is forwarded to the "Digital Pulse Code Modulator" (312) to be transformed into square wave symbols. The "iCell ID" serves the same purpose as the one in Fig 3. Finally, the "Uplink Data ReTransmission" signal enables/disables the transmission of the iCell's (201) status information.

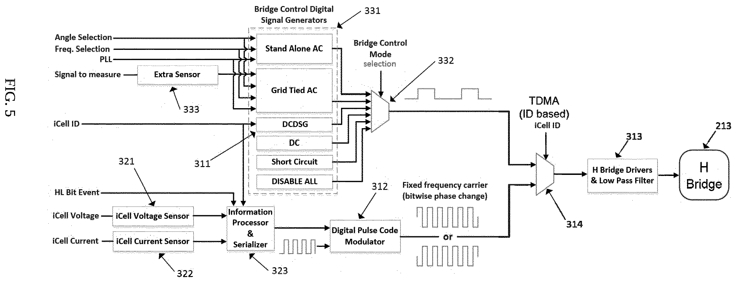

In some aspects of the first embodiment, the uplink transmitter additionally comprises five more modes of electric power generation, depicted as six blocks in total under the label "Bridge Control Digital Signal Generators" (331), shown in Fig. 5. These six blocks can be considered as the drivers of the DC-AC power bridge (213), wherein the default driver (311) is named "DCDSG".

In another aspect, the uplink interface may be configured by the values of more inputs (also shown in Fig. 5) which are controlled by the logic that is embedded in the "Control Unit" (214) allowing the direct control of the iCells (201). In a further implementation, the Uplink interface may include more sensors (333), also shown in Fig. 5, that can monitor the current or voltage level of the H-Bridge (213) input and/or output.

In a further implementation of the first embodiment, the iCell (201) logic circuit generates 4 signals that drive the electronic switches of the DC-AC H-Bridge (213) of the iCell (201). It contains logic circuits to control the power signals, that add up with the signals generated by the other iCells (201), for the construction of the current of the DC-AC H-Bridge (213). Each one of the logic circuits (331) is activated depending on the values of the selection signal of the Bridge Control Mode multiplexer (332). The information that is to be transmitted through the electronic switches of the same DC-AC H-Bridge (213), is a sequence of 3 bit vectors of the form Cell ID, Voltage, Current, where the Voltage and Current are formed by the most recent (real time) values of the corresponding registers of the embedded sensors (321) and (322), respectively.

The 1-bit signal "HL Bit Event" receives information which is translated into specific commands, that either keep the electronic switches of the DC-AC H-Bridge (213) in a specific short-circuit state so that the current of the rest of the iCells (201) of the same string bypasses the specific iCell (201), or in an off-state to disable any power generation or information transmission, or to direct the electronic switches of the DC-AC H-Bridge (213) to operate in such a fashion that specific power patterns are generated (including the transmission of information as instructed by such commands).

In a further implementation, the transmitter may use channel coding to enhance the error-correction capacity of the uplink receiver, wherein a digital logic generates coded bits from the information bits. In a specific implementation, the channel coding technique is cyclic redundancy check (CRC) which can use a generator polynomial to produce the coded bits.

According to a second embodiment, the terminal computer (107) that is connected to the iCells (201) is configured to establish uplink communication with the iCells (201), i.e., reception and decoding of the information transmitted from the iCells (201) to the terminal computer (107).

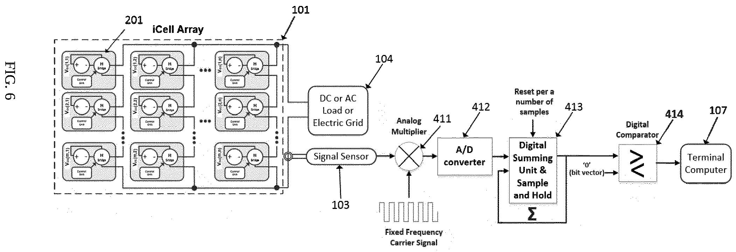

In an implementation of the second embodiment, the flow diagram of the electronic system of the terminal computer which receives the information transmitted by the uplink transmitter of each iCell (201) of the array of DC power sources, can be the one presented in Fig. 6. The circuit initially senses the signal produced (e.g. by monitoring the voltage across a shunt resistor or an inductor based on the Hall effect, measuring the current flow in the power line of the DC-bus side). The produced signal on (103) is multiplied with a fixed-frequency carrier signal on (411). The resulting product is digitized through an analog-to-digital (A/D) converter (412). The "Digital Summing Unit and Sample and Hold" (413) sums a fixed (preset) number of the A/D converter (412) output samples and periodically sends the result of this summation to the "Digital Comparator" (414) which makes a decision in favor of transmitted bit 0 or transmitted bit 1.

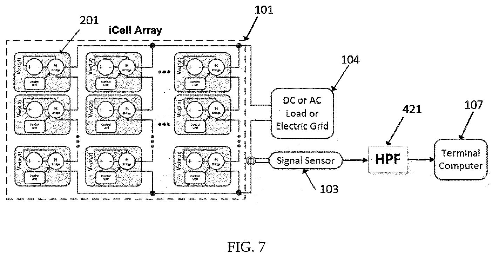

In a further implementation, the successful information transmission from the iCell (201) to the terminal computer may be validated through the experimental uplink receiver shown in Fig. 7, wherein the product resulting from the measurement passes through a high-pass filter and then is forwarded to a terminal computer for further processing.

According to a third embodiment, this uplink communication from the iCells (201) to the terminal computer (107) could be combined with communication from the terminal computer (107) to the iCells (201), which is called the downlink for the purposes of this patent application.

In one possible implementation, the control unit transmits to an iCell (201) a signal that may contain indicators that control the operation of the iCells (201). These indicators can be related with the desired generated voltage format (e.g. DC or AC) and its frequency (e.g. 50Hz or 60Hz), as well as information on whether the iCell array (101) is connected to the electric power network or not, what is the desired output power, and whether the iCell (201) should be activated or not.

According to an implementation, the uplink communication is not activated until all iCells (201) have received a configuration signal. Hence, the downlink communication starts immediately the synchronization procedure, so that, in each initialization period, it defines the desired system operation.

In accordance with the third embodiment, the same cables that are used for the uplink communication can also be used for the downlink communication. Alternatively, a separate cable or wireless transmission can be used.

According to a fourth embodiment, only downlink communication can be used to control the operation of the iCells (201).

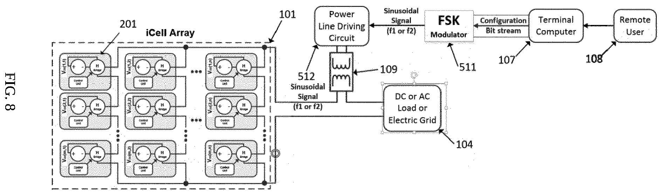

In an implementation of the third and fourth embodiments, the flow diagram of the downlink transmitter can be the one presented in Fig. 8, wherein the information is transmitted through an appropriate power circuit (512) that generates a sinusoidal signal, through a power decoupling device (109), on the power lines of the iCell array (101). The digital signal is modulated through frequency-shift keying (FSK) (511), by alternating the sinusoidal signal frequency among two distinct frequencies f1 and f2 that represent bit = 0 and bit = 1, respectively. The information is transmitted serially as a bit stream (symbol). The two frequencies can be f1 = 100 kHz and 120 kHz, or any other pair of distinct frequencies.

In another possible implementation, an iCell (201) may include embedded predetermined commands that can control its operation, upon request, as if they were received by the downlink. In one aspect, an appropriate 1-bit input determines whether the downlink receiver will receive data from the downlink transmitter link or it will execute the embedded predetermined commands.

In another implementation, the iCell embedded predetermined commands are controlled by a 1-bit input through which the final user can choose whether each one of these control commands will be executed periodically or per user request (in a round-robin fashion). The execution by the user intervention may be done by pressing a push button each time the execution needs to continue to the next predetermined command in place.

In a further implementation, the same technique allows the use of predetermined commands on the side of the terminal computer (107), thus not requiring the presence of a human operator on the remote user sight (108).

According to a fifth embodiment, each iCell (201) is configured to establish downlink communication with the terminal computer (107), i.e., reception and decoding of the information transmitted from the terminal computer (107) to the iCell (201).

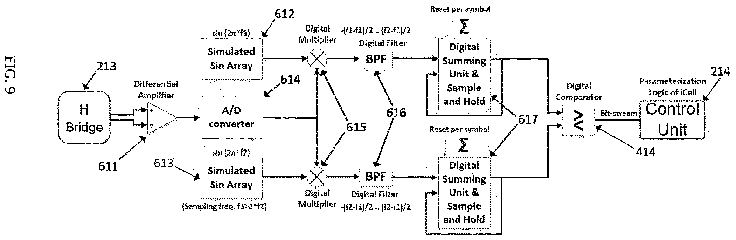

In one possible implementation, the flow diagram of the downlink receiver can be the one presented in Fig. 9, wherein the receiver is connected to the H-Bridge unit (213) of each iCell through a differential amplifier which measures the voltage difference across the leads of this H-Bridge. Then, the differential amplifier output signal is sampled by an A/D converter (614) at a frequency f3 which is higher than twice the maximum between f1 and f2.

The digitized output signal of the differential amplifier (611) is down-converted twice in parallel by multiplication with the two original sinusoidal signals of frequencies f1 και f2, which are generated by (612) and (613), respectively. The signals are down-converted by the digital multipliers (615) and then filtered through baseband filters (616). Finally, their outputs are summed up for a symbol period through a digital summing unit (617), and the two resulting values are compared to each other (414) to decide in favor of bit = 0 or bit = 1.

In a further implementation, the downlink receiver knows which is the first bit it receives, based on a specific time instant that is a common reference for both the uplink transmitter and the uplink receiver. Through this reference time, the uplink transmitters and receiver are synchronized.

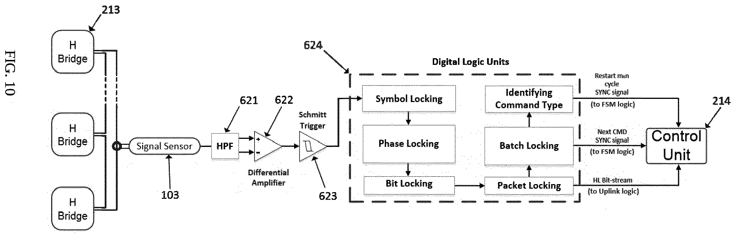

In another possible implementation, the downlink signal is transmitted as time-varying current, using a signal sensor (103) and a high-gain differential amplifier (622), as shown in Fig. 10. An appropriate digital logic is used to identify each symbol and lock appropriately, preventing any phase deviation. To identify each symbol, the digital logic initially identifies the value of one (for example, the greatest one) of the two FSK frequencies and estimates, after subsequent measurements, the value of the other frequency (or period). The latter is accomplished through a sequence of pattern-matching conditions formulated by the Digital Logic Units (624) shown in Fig. 10, with the more frequent one relating to the transition from symbol 1 to symbol 0.

In another possible implementation, the differential amplifier (622) may be preceded by a high-pass filter (621), as shown in Fig. 10.

In another possible implementation, a Schmitt trigger (623) may be used to digitize the shape of the waveform that will be entering the Digital Logic Units (624), as shown in Fig. 10.

In a further improvement of any of the aforementioned implementations, before the transmission of every command, appropriate bit sequences are transmitted by the downlink transmitter, leading to a quicker locking.

Pattern recognition techniques may also be used for the accurate estimation of the start and end times of each bit as well as the separation between successive bits.

Moreover, a second check may count the successive bits that do not comply with the transmission protocol and, if their number exceeds a threshold, then the locking procedure restarts.

In a further implementation, channel coding may be used for the downlink transmission to enhance the reliability of data transmission in the presence of high-amplitude harmonics and noise. In one specific implementation, m-sequences may be used for error correction. In another specific implementation, cyclic redundancy check (CRC) may be used for error detection. In a third specific implementation, the combination of m-sequences and CRC may be used.

In a special case of the above implementations, bits 0 and 1 are associated to two distinct m-sequences. This association assists the receiver in identifying and dropping non-compatible sequences. In addition, another coding layer may be used so that the bit sequence, wherein each bit is associated to an m-sequence, represents by itself another m-sequence that corresponds to either bit 0 or bit 1. In a further improvement of this implementation, the latter m-sequence is part of a longer bit sequence whose remaining bits are used for control purposes.

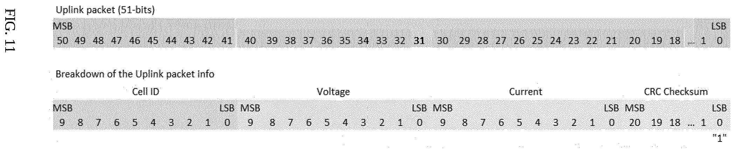

According to a sixth embodiment, a communication protocol may be designed and used to schedule the information transmission from the iCells (201) to the terminal computer (107). In one possible implementation of the sixth embodiment, the information that is transmitted by the iCell (201) to the terminal computer consists of the cell ID, its DC source current value, and its DC source voltage value. In a further implementation, this information may also include coding in the form of a CRC, as shown in Fig. 11. In another possible implementation, the information transmitted contains sensor measurements.

In one possible implementation, time-division multiplexing may be used to avoid the simultaneous transmission of information by two different iCells (201). During the time slot at which an iCell (201) transmits information to the terminal computer (107), the other iCells (201) may produce current in the default mode, i.e., without transmitting any information.

In another implementation, any other multiplexing method may be used.

In a specific time-division implementation, the iCell (201), after synchronization, knows the time interval at which it is allowed to transmit information. In a further improvement of this implementation, there is a silent period after each iCell's (201) slot at which the downlink transmission from the terminal computer (107) to an iCell (201), or some iCells (201), or all iCells (201), is allowed. In another improvement, a safety margin may be used between the uplink symbols.

In a specific implementation, for proper transmission through a cable conductor, the information needs to be modulated using a carrier of a high frequency. Due to the switching nature of the electronic switches of the terminal bridges, the form of the carrier wave will be square rather than sinusoidal and the transmitted information will be shaped into symbols, with each symbol being an integer number 'i' of periods of that carrier. The binary representation of bits 0 and 1 is done by phase shifting symbol 1 by 180 degrees in relation to symbol 0.

According to a seventh embodiment, a communication protocol may be designed and used to schedule the information transmission from the terminal computer (107) to the iCells (201). In one aspect of the seventh embodiment, this communication protocol may operate in conjunction with the protocol for communication from the iCells (201) to the terminal computer (107). In another aspect of the seventh embodiment, this communication protocol may operate independently of the protocol for communication from the iCells (201) to the terminal computer (107).

In one possible implementation of the seventh embodiment, the information is modulated through frequency-shift keying (FSK). In one aspect, this information may contain a synchronization signal. In another aspect, this information may include the ID of a specific iCell (201) that is to be parameterized or a common ID of a number of iCells (201) that are to be parameterized and the corresponding parameters that may include control bits as well as bits that determine the desired voltage and current values. The control bits may determine whether the desired produced current is AC or DC, what the frequency of the AC current is, and whether the overall energy production system depicted in Fig. 1 is standalone or connected to an electrical grid.

In another implementation, any other modulation type may be used.

According to an eighth embodiment, the aforementioned seven embodiments regarding the uplink transmitter, the uplink receiver, the downlink transmitter, and the downlink receiver may be combined to a system.

### References

[1] Z. Sun and L. Siek, "A novel power line communication controller designed for point-of-load dc-dc converters," 2010 IEEE International Conference on Power and Energy, Kuala Lumpur, 2010, pp. 667-671, doi: 10.1109/PECON.2010.5697664.
[2] H. Choi and J. Jung, "Enhanced Power Line Communication Strategy for DC Microgrids Using Switching Frequency Modulation of Power Converters," in IEEE Transactions on Power Electronics, vol. 32, no. 6, pp. 4140-4144, June 2017, doi: 10.1109/TPEL.2017.2648848.
[3] J. Du, J. Wu, R. Wang, Z. Lin and X. He, "DC Power-Line Communication Based on Power/Signal Dual Modulation in Phase Shift Full-Bridge Converters," in IEEE Transactions on Power Electronics, vol. 32, no. 1, pp. 693-702, Jan. 2017, doi: 10.1109/TPEL.2016.2527739.
[4] Y. Zhu, J. Wu, R. Wang, Z. Lin and X. He, "Embedding Power Line Communication in Photovoltaic Optimizer by Modulating Data in Power Control Loop," in IEEE Transactions on Industrial Electronics, vol. 66, no. 5, pp. 3948-3958, May 2019, doi: 10.1109/TIE.2018.2838081.
[5] J. Wu, J. Du, Z. Lin, Y. Hu, C. Zhao and X. He, "Power Conversion and Signal Transmission Integration Method Based on Dual Modulation of DC-DC Converters," in IEEE Transactions on Industrial Electronics, vol. 62, no. 2, pp. 1291-1300, Feb. 2015, doi: 10.1109/TIE.2014.2336628.
[6] W. Stefanutti, P. Mattavelli, S. Saggini and L. Panseri, "Communication on Power Lines Using Frequency and Duty-Cycle Modulation in digitally Controlled dc-dc Converters," IECON 2006 - 32nd Annual Conference on IEEE Industrial Electronics, Paris, 2006, pp. 2144-2149, doi: 10.1109/IECON.2006.347858.
[7] W. Stefanutti, S. Saggini, P. Mattavelli and M. Ghioni, "Power Line Communication in Digitally Controlled DC-DC Converters Using Switching Frequency Modulation," in IEEE Transactions on Industrial Electronics, vol. 55, no. 4, pp. 1509-1518, April 2008, doi: 10.1109/TIE.2008.917145.
[8] S. Saggini, W. Stefanutti, P. Mattavelli, G. Garcea and M. Ghioni, "Power line communication in dc-dc converters using switching frequency modulation," Twenty-First Annual IEEE Applied Power Electronics Conference and Exposition, 2006. APEC '06., Dallas, TX, 2006, pp. 6 pp.-, doi: 10.1109/APEC.2006.1620753.
[9] T. Kohama, S. Hasebe and S. Tsuji, "Simple Bidirectional Power Line Communication with Switching Converters in DC Power Distribution Network," 2019 IEEE International Conference on Industrial Technology (ICIT), Melbourne, Australia, 2019, pp. 539-543, doi: 10.1109/ICIT.2019.8755053.
[10] J. Jousse, N. Ginot, C. Batard and E. Lemaire, "Power Line Communication Management of Battery Energy Storage in a Small-Scale Autonomous Photovoltaic System," in IEEE Transactions on Smart Grid, vol. 8, no. 5, pp. 2129-2137, Sept. 2017, doi: 10.1109/TSG.2016.2517129.

## Claims

1. A system for the generation of AC power from an array of DC power generation sources and the simultaneous two-directional communication between the DC power sources (212) and the terminal computer (107) which the DC power sources of the array are connected to, without the use of a separate circuit at each DC power source (212) to generate and transmit the information signal, but utilizing the same electronic switches that are used for the generation of the AC current to also generate and transmit the information signal.

2. The system according to claim 1, wherein the iCell (201) comprises a circuit that is used to switch on/off the current it produces (213) to send information to the terminal computer (107).

3. The system according to claim 1, wherein the iCell (201) has its own embedded circuit for production of power and transmission of information regarding its operating status.

4. The system according to claim 1, wherein the iCell (201) utilizes an electronic switch driver which may be an insulated gate bipolar transistor, metal oxide semiconductor field-effect transistor, etc. and drives the DC-AC power H-bridge (the terminal full-bridge) (213) that is integrated in the iCell (201), placed right after the DC power source (212).

5. The system according to any of the preceding claims, wherein the uplink transmitter circuit is supplied by a binary identification (ID) vector that uniquely characterizes each iCell (201) in relation to the other ones.

6. The system according to any of the preceding claims, wherein the transmitter uses channel coding to enhance the error-correction capacity of the uplink receiver.

7. The system according to claim 1, wherein the terminal computer (107) that is connected to the iCells (201) is configured to establish uplink communication with the iCells (201), i.e., reception and decoding of the information transmitted from the iCells (201) to the terminal computer (107).

8. The system according to claim 7, wherein the terminal computer (107) establishes downlink communication with the iCells (201), that is, transmission of information from the terminal computer (107) to the iCells (201).

9. The system according to claim 8, wherein the same cables that are used for the uplink communication are also used for the downlink communication.

10. The system according to claim 1, wherein only downlink communication from the terminal computer (107) to the iCells (201) can be used to control the operation of the iCells (201).

11. The system according to any of the preceding claims 8 or 10, wherein the iCell (201) includes embedded predetermined commands that can control its operation.

12. The system according to any of the preceding claims 8 or 10, wherein each iCell (201) is configured to establish downlink communication with the terminal computer (107), i.e., reception and decoding of the information transmitted from the terminal computer (107) to the iCell (201).

13. The system according to claim 7, wherein a communication protocol is designed and used to schedule the information transmission from the iCells (201) to the terminal computer (107).

14. The system according to any of the preceding claims 8, 10, or 13, wherein a communication protocol is designed and used to schedule the information transmission from the terminal computer (107) to the iCells (201).

15. A computer program comprising a computer readable code which, when executed on the system according to any of the preceding claims 13 or 14, performs smart AC power generation through control of the iCells.
